# EUROPÄISCHE PATENTANMELDUNG

(11) **EP 3 449 724 A1**
(43) Veröffentlichungstag der Anmeldung: **06.03.2019**
(21) Anmeldenummer: 18401075.9
(22) Anmeldetag: 24.08.2018
(51) Int. Cl.: A01M 7/00

(54) **VERFAHREN ZUM AUSBRINGEN EINER SPRITZBRÜHE, COMPUTERGESTÜTZTES ASSISTENZSYSTEM UND SPRITZVORRICHTUNG**

(30) Priorität: 31.08.2017 DE 102017119972
(71) Anmelder: Amazonen-Werke H. Dreyer GmbH & Co. KG, 49205 Hasbergen (DE)
(72) Erfinder: Klemann, Timo, 49191 Belm (DE); Heer, Jochen, 49074 Osnabrück (DE)

(57) **Zusammenfassung**

Die Erfindung betrifft ein Verfahren zum Ausbringen einer Spritzbrühe, vorzugsweise im Wesentlichen ein Spritzmittel, auf einer landwirtschaftlichen Fläche mittels einer Spritzvorrichtung, wie insbesondere einer Feldspritze. Die Spritzvorrichtung weist wenigstens eine, vorzugsweise einstellbare Dosiereinheit auf. Der Durchsatz an Spritzbrühe wird mittels eines Durchflussmessers ermittelt. Das Verfahren zeichnet sich dadurch aus, dass der tatsächlich ausgebrachte Durchsatz an Spritzbrühe im Verhältnis zum mittels des wenigstens ein Durchflussmessers gemessenen Aufsatz an Spritzbrühe ermittelt wird zur Kalibrierung des wenigstens einen Durchflussmessers. Darüber hinaus ist noch ein computergestütztes Assistenzsystem zur Durchführung der Kalibrierung wie auch eine entsprechende Spritzvorrichtung, insbesondere eine Feldspritze, beschrieben.

## Beschreibung

Die Erfindung betrifft ein Verfahren zum Ausbringen einer Spritzbrühe auf einer landwirtschaftlichen Fläche mit einer Spritzvorrichtung gemäß dem Oberbegriff des Anspruchs 1. Des Weiteren betrifft die Erfindung ein computergestütztes Assistenzsystem zur Kalibrierung des Dosiersystems einer Spritzvorrichtung gemäß des Oberbegriffs des Anspruchs 12. Schließlich betrifft die Erfindung eine Spritzvorrichtung insbesondere eine Feldspritze gemäß dem Oberbegriff des Anspruchs 15.

Für den Einsatz auf landwirtschaftlichen Flächen sind Spritzvorrichtungen, insbesondere Feldspritzen, bekannt, mit denen eine Spritzbrühe als flüssiges landwirtschaftliches Verteilgut auf der landwirtschaftlichen Fläche ausgebracht wird. Die sogenannte Spritzbrühe wird dabei typischerweise aus einer Trägerflüssigkeit und wenigstens einem Wirkstoff, wie beispielsweise einem Düngemittel, einem Pflanzenschutzmittel oder Ähnlichem, zusammengemischt. Beim Ausbringen auf der landwirtschaftlichen Fläche, wie beispielsweise einem Acker, ist darauf zu achten, dass eine möglichst korrekte Dosierung eingehalten wird. Dies ist insbesondere bei teilflächenspezifischen Ausbringvorgängen, aber auch allgemein bei einer homogenen Verteilung der Spritzbrühe wichtig.

Zum Ausbringen weist die Spritzvorrichtung typischerweise eine Vielzahl von Spritzdüsen auf, die in der Regel an einem Spritzgestänge verteilt sind. Die Spritzbrühe beziehungsweise Spritzflüssigkeit wird durch die Spritzvorrichtung aus einem Vorratstank entnommen und über Düsen auf die landwirtschaftliche Fläche abgegeben. Dabei kann eine einzelne Dosiereinheit oder können mehrere Dosiereinheiten vorgesehen sein. Bei der Dosiereinheit kann es sich beispielsweise um ein Ventil, einen Regler, eine Blende oder ähnliches handeln. Die wenigstens eine Dosiereinheit dient dabei dazu, einen vordefinierten Durchsatz an Spritzbrühe durch die jeweils zugeordneten Spritzdüsen abzugeben.

Um aber eine korrekte Dosierung einstellen zu können, werden die Spritzdüsen beziehungsweise Dosiereinheiten vor Auslieferung der Spritzvorrichtung werkseitig kalibriert. Zur Sicherstellung korrekter Ausbringungen kann dies mit erheblichem Aufwand auch nachträglich bei einer erneuten herstellerseitigen Nachkalibrierung erfolgen.

Nachteilig hieran ist, dass der Aufwand für eine Nachkalibrierung erheblich ist. Die Maschine muss dazu im Allgemeinen werkseitig vermessen werden. Dies erfordert großen zeitlichen und finanziellen Aufwand.

Es ist daher eine Aufgabe der Erfindung auf einfache und kostengünstige Weise, dauerhaft eine hohe Dosiergenauigkeit sicherzustellen. Insbesondere soll der Aufwand gegenüber für eine werkseitigen Nachkalibrierungen reduziert werden.

Ein Verfahren zum Ausbringen einer Spritzbrühe mit den Maßnahmen des Anspruchs 1 löst diese Aufgabe. Die Spritzbrühe weist dabei vorzugsweise wenigstens eine Trägerflüssigkeit, zumeist Wasser sowie ein Spritzmittel auf, wie insbesondere einen Flüssigdünger und/oder ein Pflanzenschutzmittel. Das Ausbringen erfolgt auf einer landwirtschaftlichen Fläche, wie beispielsweise einem Acker. Hierzu ist wenigstens eine Spritzvorrichtung, insbesondere eine Feldspritze, vorgesehen. Die Spritzvorrichtung weist wenigstens eine Dosiereinheit auf. Die wenigstens eine Dosiereinheit ist insbesondere einstellbar, sodass der Durchsatz variiert werden kann. Bei der Dosiereinheit handelt es sich vorzugsweise um wenigstens eine Blende, ein Ventil und/oder einen Druckregler. Der Durchsatz des Spritzmittels wird vorzugsweise zumindest mittels wenigstens eines Durchflussmessers ermittelt. Das Verfahren zeichnet sich dadurch aus, dass der tatsächlich ausgebrachte Durchsatz an Spritzbrühe im Verhältnis zu dem mittels wenigstens einen Durchflussmessers gemessenen Durchsatz an Spritzbrühe ermittelt wird. So kann eine Kalibrierung bzw. Nachkalibrierung des wenigstens einen Durchflussmessers erfolgen. Auf diese Weise kann durch eine einfache Messung vor Ort eine Kalibrierung der Spritzvorrichtung beziehungsweise der Dosiereinheiten vorgenommen werden. Die werksseitige Nachkalilbrierung kann damit häufig entfallen.

Vorzugsweise erfolgt die Kalibrierung mittels wenigstens einer, der Spritzvorrichtung zugeordneten Kalibrierungsvorrichtung. Mit der Kalibrierungsvorrichtung können die erforderlichen Messungen durchgeführt werden, insbesondere des Durchsatzes an Spritzmittel pro Zeiteinheit. Es wird damit eine Kalibrierung vorgenommen.

Insbesondere wird die tatsächlich ausgebrachte Menge an Spritzbrühe bei einer Einstellung der Dosiereinheit oder bei mehreren unterschiedlichen Einstellungen der Dosiereinheit erfasst. Bereits mit einer einzelnen Einstellung der Dosiereinheit kann eine Kalibration erfolgen. Durch Messung bei unterschiedlichen Einstellungen der Dosiereinheit kann die Genauigkeit erhöht werden. Insbesondere lassen sich dabei volumenstromabhängige Abweichungen oder ähnliches wie auch andere Besonderheiten des Flüssigkeitskreislaufes berücksichtigen. So kann die Genauigkeit der Messung und damit der Kalibration weiter verbessert werden.

Zur Kalibration wird vorzugsweise die wenigstens eine Einstellung der Dosiereinheit beziehungsweise der Düsen vorherbestimmt. Mit anderen Worten wird im Vorfeld festgelegt, bei welcher Einstellung die Kalibration vorgenommen wird. Damit wird sichergestellt, dass der für die Kalibration optimale Einstellungsbereich verwendet wird. Alternativ kann auch eine Einstellung der Dosiereinheit zum jeweiligen Kalibrationsvorgang gewählt werden. Dies kann beispielsweise durch den Benutzer beziehungsweise Bediener der Anlage oder auch durch eine Steuerung geschehen. So kann unabhängig von der vorbestimmten Einstellung der Dosiereinheit ein optimaler Einstellungsbereich für die Kalibration ausgewählt werden.

Der Druck der Spritzbrühe wird vorzugsweise als Parameter zur Einstellung der Dosiereinheit verwendet. Dies bedeutet, dass der Druck festgelegt wird, bei dem die Kalibration durchgeführt wird. Da der Druck im Allgemeinen die Ausbringmenge unmittelbar beeinflusst, eignet er sich besonders gut als Parameter zur Kalibration.

Vorzugsweise ist zur Durchführung des Verfahrens ein Zusammenhang zwischen Druck und Ausbringmenge hinterlegt. Dieser Zusammenhang kann beispielsweise in der Steuerung hinterlegt sein oder in einer Speichereinheit, welcher der Kalibrierungsvorrichtung und/oder der Spritzvorrichtung zugeordnet ist.

Vorzugsweise wird die Messung beziehungsweise Kalibration durch Messung beziehungsweise Erfassung eines ausgebrachten Volumens während eines Zeitintervalls durchgeführt. Das Zeitintervall ist dabei insbesondere vorherbestimmt. Es kann alternativ aber auch während der Messung beziehungsweise des Kalibrationsvorgangs festgelegt werden, insbesondere durch einen Bediener beziehungsweise Benutzer oder auch eine Steuerung. Durch Messung des ausgebrachten Volumens während eines Zeitintervalls wird unmittelbar ermittelt, welche Durchflussmenge bei einer konkreten Einstellung der Dosiereinheit ausgebracht wird. Dies erfolgt, indem beispielsweise bei einem konstanten Druck eine derartige Erfassung vorgenommen wird. Durch Wiederholung bei verschiedenen Drücken kann direkt ein Zusammenhang zwischen Druck und Durchflussmenge festgestellt werden. Eine Kalibration der Spritzvorrichtung kann erfolgen.

Umgekehrt kann aber auch eine Messung der benötigten Zeit zum Ausbringen eines vorherbestimmten Volumens an Spritzbrühe ermittelt werden. Diese beiden Messverfahren können auch gegebenenfalls alternativ bei einer Vorrichtung verwirklicht sein. So kann je nach Bedarf die optimale Kalibrationsart ausgewählt werden.

Besonders bevorzugt ist wenigstens eine Messvorrichtung als Teil der Kalibrierungsvorrichtung zur Erfassung der zur Kalibrierungszwecken abgegebenen Menge an Spritzbrühe vorgesehen. Die Messvorrichtung wird dazu zur Erfassung der abgegebenen Menge an Verteilgut im Rahmen der Kalibration verwendet. Als Messvorrichtung kann insbesondere ein Messbehälter vorgesehen sein, der weiter vorzugsweise ein vordefiniertes Volumen aufweist. Der Messbehälter kann insbesondere durch entsprechende Volumenangaben zur genauen Erfassung der ausgebrachten Menge dienen. So kann während eines definierten Zeitintervalls die ausgebrachte Menge ermittelt werden. Umgekehrt kann auch die Zeit erfasst werden, die benötigt wird, um umgekehrt die Messvorrichtung entsprechend zu füllen. Dies entspricht der Umkehrung der Messung in einem vordefinierten Zeitintervall. Auf beide Arten kann eine genaue Erfassung erfolgen.

Weiter bevorzugt wird zur Kalibrierung lediglich der Durchsatz einer Teilbreite der Spritzvorrichtung erfasst. Dabei kann insbesondere lediglich eine Teilbreite oder sogar nur eine einzelne Düse der Spritzvorrichtung aktiviert sein. So wird unnötiges Verspritzen von Spritzbrühe vermieden. Außerdem kann eine teilbreitenspezifische Messung und/oder Kalibration erfolgen. Die Messvorrichtung kann dabei zur Aufnahme der ausgebrachten Spritzbrühe beispielsweise einer Spritzdüse oder auch mehrerer Spritzdüsen vorgesehen sein.

Beispielsweise ist es denkbar, mittels der Messvorrichtung die ausgebrachte Menge zumindest einer Düse je Teilbreite zu erfassen. Anschließend kann durch Hochrechnung der pro Düse erfassten Menge die pro Teilbreite ausgegebene Menge ermittelt werden. Die über die gesamte Gestängebreite ausgebrachte Menge kann dann beispielsweise als Summe der pro Teilbreite ermittelten ausgegebenen Mengen oder durch Hochrechnung der für eine Teilbreite ermittelten ausgegebenen Menge ermittelt werden

Alternativ kann bei Aktivierung mehrerer Düsen oder Teilbreiten nur ein Teil der ausgebrachten Spritzbrühe aufgefangen werden. Durch Hochrechnung kann die Gesamtdurchsatzmenge bestimmt werden.

Aus mittels der Kalibrierungsvorrichtung ermittelten Messwerten des Durchsatzes einer Teilbreite beziehungsweise einer Spritzdüse kann der gesamte Durchsatz der Spritzvorrichtung ermittelt werden. Vorzugsweise erfolgt dies durch Berechnung. Dazu muss bekannt sein, in welchem Verhältnis zur gesamten Gestängebreite die Spritzbrühe durch die einzelnen Teilbreiten beziehungsweise die einzelnen Spritzdüsen ausgebracht wird. Indem aber lediglich eine Teilbreite beziehungsweise wenigstens eine Spritzdüse kalibriert wird, lässt sich auf die übrigen Teile der Spritzvorrichtung entsprechend hochrechnen. So wird eine separate Messung zu jeder einzelnen Spritzdüse beziehungsweise aller Teilbreiten vermieden. Es kann aber alternativ ebenfalls erfolgen, um so eine besonders genaue Kalibrierung zu erreichen.

Weiter bevorzugt wird in einem Spritzmittelkreislauf der Spritzvorrichtung wenigstens ein Durchflussmesser kalibriert. Es handelt sich dabei um wenigstens einen Durchflussmesser im Vorlauf und/oder im Rücklauf des Spritzmittelkreislaufs. Weiter bevorzugt werden alle Durchflussmesser der Spritzvorrichtung kalibriert. Dies kann durch Messung und/oder durch Berechnung erfolgen. So kann für eine vollständige Kalibrierung gesorgt werden.

Während des Kalibrierungsvorgangs ermittelt der wenigstens eine Durchflussmesser ebenfalls die ausgebrachte Menge. Werden Abweichungen zwischen der vom Durchflussmesser ermittelten ausgebrachten Menge und der während des Kalibrierungsvorgangs mittels der Messvorrichtung ermittelten, tatsächlich ausgebrachten Menge festgestellt, wird der Durchflussmesser anhand der mittels der Messvorrichtung ermittelten, tatsächlich ausgebrachten Menge neu kalibriert.

Zur Kalibrierung des Durchflussmessers kann beispielsweise das Verhältnis aus der mittels Messvorrichtung ermittelten, tatsächlich ausgebrachten Menge und der vom Durchflussmesser ermittelten Menge bestimmt und anschließend die vom Durchflussmesser ermittelte Menge mit diesem Verhältniswert multipliziert werden.

Vorzugsweise können unterschiedliche Eigenschaften der Spritzbrühe, wie beispielsweise unterschiedliche Viskositäten und Zusammensetzungen verschiedener Spritzflüssigkeiten berücksichtigt werden. Dies erfolgt insbesondere durch Messung und/oder durch Berechnung des Durchsatzes. Hierzu ist es wichtig, entsprechende Eigenschaften und deren Verhältnis zueinander zu kennen. Beispielsweise kann die Viskosität als eines der Hauptmerkmale auf einfache Weise für verschiedene Spritzbrühen ins Verhältnis gesetzt werden. Entsprechende Werte lassen sich beispielsweise während des Kalibrierungsvorgangs vom Benutzer eingeben oder auch anhand von Tabellen oder Ähnlichem in der Anlage vorsehen.

Die eingangs geschilderte Aufgabe wird außerdem gelöst durch ein computergestütztes Assistenzsystem zur Kalibrierung des Durchsatzes einer Spritzvorrichtung zur Ausbringung einer Spritzbrühe auf einer landwirtschaftlichen Fläche mit den Merkmalen des Anspruchs 12. Das Assistenzsystem ist dadurch gekennzeichnet, dass mittels eines Verfahrens, wie es oben beschrieben ist, eine Messung des Durchsatzes an Spritzbrühe zur Kalibrierung erfolgt. Durch einen derartigen Kalibrierungsvorgang kann benutzerseitig eine einfache Kalibrierung der Spritzvorrichtung vorgenommen werden. So können insbesondere teure Transporte und werkseitige Wartungen zumindest zum Teil vermieden werden. Die Genauigkeit des Ausbringvorgangs kann damit aber deutlich erhöht werden.

Vorzugsweise wird zur Kalibrierung des Durchsatzes eine Erfassung des tatsächlich ausgebrachten Volumens an Spritzbrühe während eines Zeitintervalls und/oder eine Erfassung der Zeit zum Ausbringen eines vordefinierten Volumens vorgenommen. Dies wird durch das Assistenzsystem gesteuert und/oder unterstützt. Entsprechende Messwerte können durch das Assistenzsystem direkt aufgenommen werden oder auch durch einen Bediener eingegeben werden.

Besonders bevorzugt erfolgt eine teilbreitenweise und/oder düsenweise Erfassung des Durchsatzes. Weiter bevorzugt erfolgt dabei eine Berechnung des gesamten Durchsatzes der Spritzvorrichtung anhand dieser Daten für eine Teilbreite beziehungsweise einzelne Spritzdüsen. Anhand dessen und anhand der Charakteristik der Spritzvorrichtung kann dann auf den Gesamtdurchsatz geschlossen werden. Gegebenenfalls können auch verschiedene exemplarische Messungen durchgeführt werden, um entsprechende Druckverhältnisse beziehungsweise Änderungen im Betrieb der Spritzvorrichtung berücksichtigen zu können.

Weiter bevorzugt ist wenigstens eine automatische Kalibrierungsvorrichtung zur Erfassung des zur Kalibrierung ausgebrachten Volumens an Spritzbrühe vorgesehen. Insbesondere ist wenigstens eine Anzeigevorrichtung und/oder wenigstens eine Eingabevorrichtung zur Steuerung vorgesehen. So kann das Assistenzsystem mit der entsprechenden Spritzvorrichtung wechselwirken. Auch Eingabevorrichtung ist zur Bedienung durch einen Benutzer beziehungsweise Bediener vorgesehen. So kann auf einfache Weise die Kalibrierung erfolgen.

In bevorzugter Weise kann die Kalibrierungsvorrichtung der automatisiert sein, dass dem Bediener über die Anzeigevorrichtung angezeigt wird, an welcher Teilbreite und/oder Düse die ausgebrachte Menge mittels Messvorrichtung zu erfassen ist. Das Ausbringen der Spritzbrühe erfolgt dann automatisch an dieser Teilbreite und/oder Düse während eines festgelegten Zeitintervalls. Anschließend ist die mittels Messvorrichtung erfasste ausgebrachte Menge von dem Bediener festzustellen und über die Eingabevorrichtung der Kalibrierungsvorrichtung und/oder Steuerung zuzuführen. Zur Fortsetzung der Kalibrierung und/oder Erhöhung der Genauigkeit wird der Vorgang an derselben oder einer anderen Teilbreite und/oder Düse wiederholt.

Über die der Kalibrierungsvorrichtung und/oder Steuerung zugeführten Werte wird die Kalibrierung in der zuvor beschriebenen Weise durchgeführt.

Die eingangs geschilderte Aufgabe wird außerdem gelöst durch eine Spritzvorrichtung, insbesondere eine Feldspritze, zum Ausbringen einer Spritzbrühe aus flüssigem landwirtschaftlichem Verteilgut beziehungsweise einer Spritzbrühe mit den Merkmalen des Anspruchs 15. Bei der Spritzbrühe handelt es sich insbesondere um einen Flüssigdünger und/oder ein Pflanzenschutzmittel. Dieser beziehungsweise dieses ist in einer Trägerflüssigkeit verteilt. Die Spritzbrühe wird auf einer landwirtschaftlichen Fläche ausgebracht. Die Spritzvorrichtung implementiert insbesondere ein Verfahren zur Kalibrierung, wie es oben beschrieben ist. Weiter vorzugsweise ist dabei ein entsprechendes computergestütztes Assistenzsystem vorgesehen, wie es ebenfalls oben diskutiert wird. So kann auf einfache Weise eine Kalibrierung einer Spritzvorrichtung beziehungsweise Feldspritze erfolgen.

In bevorzugter Weise ist die Durchführung der beschriebenen Kalibrierung mit der Trägerflüssigkeit der Spritzbrühe vorgesehen. Trägerflüssigkeit der Spritzbrühe ist zumeist Wasser, dem die Spritzmittel beigemischt werden. Die Verwendung von Wasser ist für Bediener und Umwelt ungefährlich, sodass die durch die beschriebene Kalibrierung entstehende Gesundheits- und/oder Umweltgefährdung minimal ist. Zudem fallen keine zu entsorgenden Spritzbrühe-Mengen an. Somit kann die Kalibrierung ohne weiteren Aufwand beispielsweise im Rahmen einer turnusgemäßen Maschinenwartung durchgeführt werden.

Aus den Unteransprüchen ergeben sich gegebenenfalls weitere bevorzugte Ausführungsformen der Erfindung. Auch lassen sich die obigen Ausführungen wie auch die in den Ansprüchen formulierten Merkmale gegebenenfalls miteinander kombinieren, sofern dies technisch sinnvoll ist. So können entsprechende weitere Merkmalskombinationen vorgesehen sein.

Ein bevorzugtes Ausführungsbeispiel der Erfindung wird im Folgenden anhand der Zeichnungen näher beschrieben. In diesen zeigen:
- Fig. 1.: einen Flüssigkeitskreislauf einer Feldspritze, und
- Fig. 2: einen Ausschnitt der Figur 1 im Bereich der Spritzdüsen zur Darstellung eines Kalibrierungsvorganges.

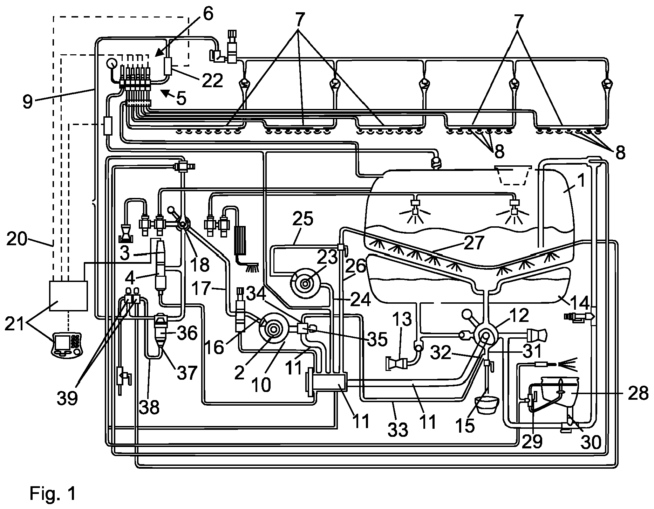

Im vorliegenden Fall ist lediglich der Flüssigkeitskreislauf einer Feldspritze als Beispiel für eine landwirtschaftliche Vorrichtung dargestellt. Der Flüssigkeitskreislauf ist dazu als Übersichtszeichnung in der Fig. 1 dargestellt.

Die Feldspritze weist unter anderem einen Flüssigkeitstank 1 zur Aufnahme der auszubringenden Spritzbrühe auf. Es kann sich dabei beispielsweise um eine Pflanzenschutzmittelbrühe oder auch eine Düngemittelbrühe handeln. Des Weiteren ist eine motorisch angetriebene Pumpe 2 zur Förderung der Spritzbrühe gezeigt. Eine Dosierarmatur weist hier über einen Stellmotor 3 ein einstellbares Regelventil 4 auf.

Um hier ein teilbreitenweises Ausbringen der Spritzbrühe zu ermöglichen, sind Teilbreitenventile 5 mit motorischen Einstellgliedern 6 vorgesehen. Diese dienen dazu, zu den einzelnen Teilbreitenleitungen 7 entsprechende Spritzdüsen 8 an einem hier nicht gezeigten Verteilergestänge 8 über eine Spritzleitung 9 zu versorgen. So können einzelne Bereiche der gesamten Gestängebreite einzeln zu- oder abgeschaltet werden.

Die Pumpe 2 ist auf ihrer Saugseite 10 an eine Saugleitung 11 mit einer Filtereinrichtung 11'angeschlossen. Unter Zwischenschaltung eines zentralen Umschaltventils 12 ist diese wiederum am unteren Bereich des Flüssigkeitstanks 1 angeschlossen. So kann entsprechend Spritzbrühe aus dem Flüssigkeitstank 1 mittels der Pumpe 2 gefördert werden. Das Umschaltventil 12 kann weitere Leitungen aufweisen. Beispielsweise kann es zum externen Anschluss 13 von Wassertanks, zum Anschluss von Vorrichtungen zum Ansaugen von Wasser aus Gewässern, zum Anschluss eines Klarwasserbehälters 14 sowie zum Anschluss einer Ablaufleitung 15 ausgebildet sein.

Auf ihrer Druckseite 16 ist die Pumpe 2 mit einer Druckleitung 17 verbunden. Diese ist wiederum unter Zwischenschaltung eines weiteren Umschaltventils 18 mit dem Regelventil der Dosierarmatur und entsprechenden weiteren Einrichtungen der Feldspritze verbunden. Eine Reihe Rücklaufleitungen sind außerdem zu einer Sammelrücklaufleitung 19 zusammengefasst. Diese Rücklaufleitung 19 mündet in den Flüssigkeitstank 1. So kann nicht ausgebrachte Spritzbrühe wieder zurückgeführt werden. Der Kreislauf ist dementsprechend geschlossen.

Die Feldspritze weist außerdem eine Signalleitung 20 auf, mit der ein Board-Computer 21 als Steuerungseinrichtung für die Feldspritze mit einem Durchflussmesser 22 verbunden ist. Der Board-Computer 21 ist dabei als elektronische Steuer- und/oder Regeleinrichtung ausgebildet. Diese sorgt für den Betrieb der Feldspritze. Der Durchflussmesser 22 dient dazu, den Durchfluss der Spritzbrühe in der Spritzleitung 9 zu messen. Hierzu ist der Durchflussmesser 22 in dieser vom Regelventil 4 zu den Teilbreitenleitungen 7 führenden Spritzleitung 9 angeordnet.

Der Klarwasserbehälter 14 ist unterhalb des Flüssigkeitstank 1 angeordnet. An dem Klarwasserbehälter 14 ist eine zweite Pumpe 23 angeschlossen. Der Klarwasserbehälter 14 dient dementsprechend zur Aufnahme und gegebenenfalls Abgabe von Klarwasser. Hierzu ist die Pumpe 23 saugseitig über die Leitung 24 mit dem Umschaltventil 12 verbunden. So kann die Saugleitung 24 wahlweise mit verschiedenen Flüssigkeitsreservoir verbunden werden, beispielsweise mit dem Flüssigkeitstank 1, dem Klarwasserbehälter 14 oder auch einem externen Flüssigkeitsvorrat 13. Druckseitig ist an der zweiten Pumpe eine Druckleitung 25 angeschlossen. Die Druckleitung 25 ist mit einem Spülsystem 26 und/oder Rührsystem 27 in Abhängigkeit von entsprechenden Ventilstellungen des Umschaltventils 12 Feldspritze zu verbinden.

Die Feldspritze weist außerdem einen Einspülbehälter 28 auf. Dieser dient dazu, entsprechende Wirkstoffe beziehungsweise Spritzmittel zur Herstellung der fertigen Spritzbrühe zuzugeben. An dem Einspülbehälter 28 ist dazu dessen Oberbereich eine vorzugsweise als Fristwasserzuführleitung ausgebildete Befüllleitung 29 angeordnet. Am unteren Bereich des Einspülbehälters 28 ist eine Saugleitung 30 angeschlossen. Diese Saugleitung 30 mündet in den Flüssigkeitstank 1 ein. Über die Saugleitung 30 wird Flüssigkeit aus dem Einspülbehälter 28 abgesaugt und in den Flüssigkeitstank 1 verbracht.

Die Saugleitung 11 ist am unteren Abgang 31 des Umschaltventils 12 oberhalb eines Ablaufventils 32 über eine Zweigleitung 33 mit einem Mehrwegeventil 35 verbunden. Hierzu weist das Mehrwegeventil 35 einen oberen Abgang 34 auf.

Auf der Druckseite 13 der Pumpe 2 zu den Spritzdüsen 8 hin ist ein Druckfilter 36 angeordnet. Der untere Abgang 37 des Druckfilters 36 ist mit einer Entleerungsleitung 38 versehen, die zu den Spritzdüsen 8 führt. Im Ergebnis kann die hier gezeigte Feldspritze durch einzelne Adressierung der Teilbreite 7 mittels des Board-Computers 21 gezielte Ausbringvorgänge nach Teilbreiten 24 durchführen. Hierzu ist aber die genaue Kenntnis der ausgebrachten Menge an Spitzbrühe in Abhängigkeit von dem anliegenden Druck beziehungsweise den mittels des Durchflussmessers 22 ermittelten Durchflusses zu kennen. Dazu wird eine entsprechende Kalibrierung der landwirtschaftlichen Feldspritze erforderlich.

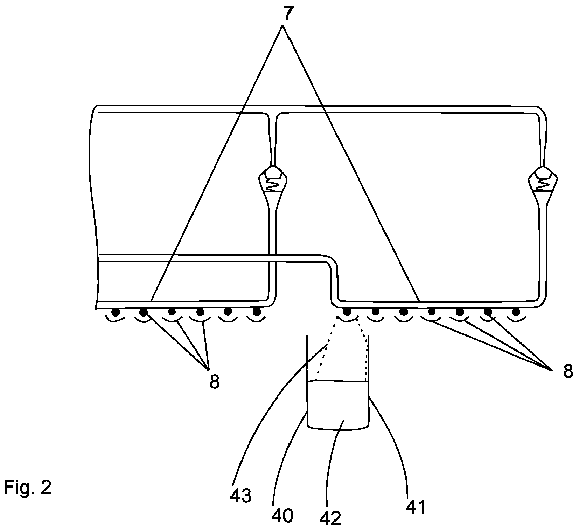

Dies ist beispielhaft in der Fig. 2 gezeigt. Hier ist ein Ausschnitt aus dem Spritzgestänge mit einigen Spritzdüsen 8 zweier Teilbreiten 7 dargestellt. Dies ist ein Ausschnitt aus dem oberen rechten Bereich der Figur 1.

Außerdem ist in der Darstellung ein Messbehälter 40 gezeigt. Dieser weist hierzu eine Skala 41 auf. Der Messbecher 40 dient zur Aufnahme der aus den Düsen 8 abgegebenen Flüssigkeit 42, also insbesondere der Spritzbrühe. Diese wird üblicherweise in Form eines Spritzfächers 43 aus den einzelnen Düsen 8 abgegeben.

Durch Ermittlung der beispielsweise pro Zeiteinheit abgegebenen Flüssigkeitsmenge 42 bei Einschalten einer oder mehrerer Teilbreiten 7 kann so auf die tatsächlich abgegebene Flüssigkeitsmenge zurückgerechnet werden. Hierzu ist beispielsweise die Flüssigkeitsmenge einer einzelnen Spritzdüse 8 aufzufangen. Die Dauer der Messung wird üblicherweise vorgegeben. Dann kann die aufgefangene Flüssigkeit 42 mittels des Messbechers 40 ermittelt werden.

Alternativ kann auch die Zeit durch einen Benutzer gestoppt bzw. gemessen werden, die benötigt wird, um eine vordefinierte Menge an Flüssigkeit 42 im Messbecher 40 aufzufangen. Diese beiden Messmethoden sind äquivalent zueinander.

Vorteilhaft kann die Feldspritze mittels des Board-Computers 21 nur für eine vordefinierte Zeiteinheit eingeschaltet werden, so dass der Benutzer lediglich die Flüssigkeitsmenge 42 mittels des Messbechers 40 abmessen muss, um die Zeitdauer zu ermitteln, zu der eine gewisse Flüssigkeitsmenge 42 im Messbecher 40 vorhanden ist, ist es erforderlich, dass der Bediener eine Zeitmessung vornehmen kann. Dies kann beispielsweise mit einer Armbanduhr erfolgen.

Es können mehrere unterschiedliche Messungen vorgenommen werden, um die Genauigkeit zu erhöhen. Beispielsweise können unterschiedlich viele Teilbreiten 7 eingeschaltet werden. Dadurch ändern sich typischerweise die Druckverhältnisse innerhalb des Flüssigkeitskreislaufes. Anhand mehrerer unterschiedlicher Messbedingungen kann die Genauigkeit der Messung erhöht werden.

Beispielsweise können auch die Flüssigkeitsmengen mehrerer Düsen 8 mittels des Messbechers 40 erfasst werden. Dies kann auch bei unterschiedlichen Düseneinstellungen erfolgen. Beispielsweise können umschaltbare Düsen 8 vorhanden sein, die mit verschiedenen Blenden oder unterschiedlichen Strahlcharakteristiken arbeiten. So kann für jede Einstellung ein entsprechender Kalibrierungsvorgang vorgenommen werden.

Die ermittelten Messdaten können nach Abschluss der jeweiligen Messung in den Board-Computer 21 eingegeben werden. Dieser kann dann aus den Messdaten entsprechende Korrekturwerte durch beispielsweise Druckmessung oder auch durch Durchflussmessung ermittelten Werte berechnet werden. So kann eine möglichst genaue Ausbringmenge eingestellt werden.

Die ermittelten Werte können beispielsweise auch zur Bewertung der Güte und Qualität der Düsen 8 beziehungsweise der übrigen Messkomponenten dienen. So kann beispielsweise ein Rückschluss auf starken Verschleiß oder ähnliches gemacht werden.

### Bezuqszeichenliste:

- 1: Flüssigkeitstank
- 2: Pumpe
- 3: Stellmotor
- 4: Regelventil
- 5: Teilbreitenventil
- 6: Einstellglied
- 7: Teilbreitenleitung
- 8: Spritzdüse
- 9: Spritzleitung
- 10: Saugseite
- 11: Saugleitung
- 12: Umschaltventil
- 13: Anschluss
- 14: Klarwasserbehälter
- 15: Ablaufleitung
- 16: Druckseite
- 17: Druckleitung
- 18: Umschaltventil
- 19: Sammelrücklaufleitung
- 20: Signalleitung
- 21: Board-Computer
- 22: Durchflussmesser
- 23: Pumpe
- 24: Leitung
- 25: Druckleitung
- 26: Spülsystem
- 27: Rührsystem
- 28: Einspülbehälter
- 29: Befüllleitung
- 30: Saugleitung
- 31: Abgang
- 32: Ablaufventil
- 33: Zweigleitung
- 34: oberer Abgang
- 35: Mehrwegeventil
- 36: Druckfilter
- 37: unterer Abgang
- 38: Entleerungsleitung
- 40: Messbehälter/Messbecher
- 41: Skala
- 42: Flüssigkeit/Flüssigkeitsmenge
- 43: Spritzfächer

## Patentansprüche

1. Verfahren zum Ausbringen einer Spritzbrühe, vorzugsweise mit wenigstens einem Spritzmittel, wie insbesondere einem Flüssigdünger und/oder einem Pflanzenschutzmittel, auf einer landwirtschaftlichen Fläche mittels einer Spritzvorrichtung, insbesondere einer Feldspritze, wobei die Spritzvorrichtung wenigstens eine vorzugsweise einstellbare Dosiereinheit aufweist, wie insbesondere wenigstens ein Ventil und/oder einen Druckregler, und wobei der Durchsatz der Spritzbrühe mittels wenigstens eines Durchflussmessers ermittelt wird, **dadurch gekennzeichnet, dass** der tatsächlich ausgebrachte Durchsatz an Spritzbrühe im Verhältnis zum mittels des wenigstens einen Durchflussmessers gemessenen Durchsatz an Spritzbrühe ermittelt wird zur Kalibrierung des wenigstens einen Durchflussmessers.

2. Verfahren nach Anspruch 1, **dadurch gekennzeichnet, dass** die Kalibrierung mittels einer der Spritzvorrichtung zugeordneten Kalibrierungsvorrichtung durchgeführt wird.

3. Verfahren nach Anspruch 1 oder 2, **dadurch gekennzeichnet, dass** die tatsächlich ausgebrachte Menge an Spritzbrühe bei einer Einstellung der Dosiereinheit oder bei mehreren unterschiedlichen Einstellungen der Dosiereinheit erfasst wird.

4. Verfahren nach einem der vorhergehenden Ansprüche, **dadurch gekennzeichnet, dass** die wenigstens eine Einstellung der Dosiereinheit zur Kalibration vorherbestimmt wird.

5. Verfahren nach einem der vorhergehenden Ansprüche, **dadurch gekennzeichnet, dass** der Druck der Spritzbrühe als Parameter zur Einstellung der Dosiereinheit verwendet wird.

6. Verfahren nach einem der vorhergehenden Ansprüche, **dadurch gekennzeichnet, dass** die Messung beziehungsweise Kalibrierung durch Messung eines ausgebrachten Volumens an Spritzbrühe während wenigstens eines Zeitintervalls erfolgt, insbesondere eines vorherbestimmten Zeitintervalls.

7. Verfahren nach einem der vorhergehenden Ansprüche, **dadurch gekennzeichnet, dass** wenigstens eine Messvorrichtung, insbesondere ein Messbehälter mit einem vordefinierten Volumen, als Teil der Kalibrierungsvorrichtung zur Erfassung der zu Kalibrierungszwecken abgegebenen Menge an Spritzbrühe verwendet wird.

8. Verfahren nach einem der vorhergehenden Ansprüche, **dadurch gekennzeichnet, dass** zur Kalibrierung lediglich der Durchsatz einer Teilbreite der Spritzvorrichtung erfasst und/oder aktiviert wird.

9. Verfahren nach einem der vorhergehenden Ansprüche, **dadurch gekennzeichnet, dass** aus mittels der Kalibrierungsvorrichtung ermittelten Messwerten des Durchsatzes einer Teilbreite der gesamte Durchsatz der Spritzvorrichtung ermittelt wird, vorzugsweise berechnet wird.

10. Verfahren nach einem der vorhergehenden Ansprüche, **dadurch gekennzeichnet, dass** in einem Spritzmittelkreislauf der Spritzvorrichtung wenigstens ein Durchflussmesser im Vorlauf und/oder im Rücklauf des Spritzmittelkreislaufs kalibriert wird, wobei vorzugsweise alle Durchflussmesser kalibriert werden, gegebenenfalls mittels Berechnung.

11. Verfahren nach einem der vorhergehenden Ansprüche, **dadurch gekennzeichnet, dass** unterschiedliche Viskositäten verschiedener Spritzflüssigkeiten berücksichtigt werden, insbesondere durch Messung und/oder durch Berechnung des Durchsatzes.

12. Computergestütztes Assistenzsystem zur Kalibrierung des Durchsatzes einer Spritzvorrichtung zum Ausbringen einer Spritzbrühe auf einer landwirtschaftlichen Fläche, **dadurch gekennzeichnet, dass** mittels eines Verfahrens nach einem der vorhergehenden Ansprüche eine Messung des Durchsatzes durch Erfassung des tatsächlich ausgebrachten Volumens an Spritzbrühe während eines Zeitintervalls erfolgt.

13. Computergestütztes Assistenzsystem nach Anspruch 12, **dadurch gekennzeichnet, dass** eine teilbreitenweise Erfassung des Durchsatzes erfolgt, wobei vorzugsweise eine Berechnung des gesamten Durchsatzes der Spritzvorrichtung erfolgt.

14. Computergestütztes Assistenzsystem nach Anspruch 12 oder 13, **dadurch gekennzeichnet, dass** wenigstens eine automatische Kalibrierungsvorrichtung zur Erfassung des zur Kalibrierung ausgebrachten Volumens an Spritzbrühe vorgesehen ist, wobei weiter vorzugsweise wenigstens eine Anzeigevorrichtung und eine Eingabevorrichtung zur Steuerung vorgesehen sind.

15. Spritzvorrichtung, insbesondere Feldspritze, zum Ausbringen einer Spritzbrühe, wie insbesondere eines Flüssigdüngers und/oder eines Pflanzenschutzmittels, auf einer landwirtschaftlichen Fläche, wobei mittels eines Verfahrens nach einem der Ansprüche 1 bis 11 eine Kalibrierung vorgesehen ist, vorzugsweise mittels eines computergestützten Assistenzsystems nach einem der Ansprüche 12 bis 14.
